**Europäisches Patentamt**

**European Patent Office**

**Office européen des brevets**

(19)

(11) Veröffentlichungsnummer : **0 396 968 B1**

(12) ## EUROPÄISCHE PATENTSCHRIFT

(45) Veröffentlichungstag der Patentschrift :
**05.08.92 Patentblatt 92/32**

(21) Anmeldenummer : **90107959.0**

(22) Anmeldetag : **26.04.90**

(51) Int. Cl.⁵ : **A01D 41/12**

(54) **Mähdrescher.**

(30) Priorität : **06.05.89 DE 3914962**

(43) Veröffentlichungstag der Anmeldung :
**14.11.90 Patentblatt 90/46**

(45) Bekanntmachung des Hinweises auf die
Patenterteilung :
**05.08.92 Patentblatt 92/32**

(84) Benannte Vertragsstaaten :
**BE DE DK FR**

(56) Entgegenhaltungen :
**AT-B- 385 171**
**DE-B- 1 287 843**
**DE-B- 2 045 070**
**FR-A- 2 107 810**
**US-A- 3 481 344**

(73) Patentinhaber : **CLAAS OHG**
**Postfach 1140 Münsterstrasse 31**
**W-4834 Harsewinkel- 1 (DE)**

(72) Erfinder : **Heidjann, Franz, Dipl.-Ing.**
**Weimarer Strasse 27**
**W-4834 Harsewinkel 1 (DE)**
Erfinder : **Kleingräber, Karl-Josef, Dipl.-Ing.**
**Sendener Stiege 43A**
**W-4400 Münster (DE)**

(74) Vertreter : **Patentanwälte Dipl.-Ing. E. Eisele**
**Dr.-Ing. H. Otten**
**Seestrasse 42**
**W-7980 Ravensburg (DE)**

EP 0 396 968 B1

## Beschreibung

Die Erfindung betrifft einen Mähdrescher mit einem Dreschwerkgehäuse, einem quer zur Fahrtrichtung eingebauten Tangentialfluß-Dreschwerk, bestehend aus einer Trommel und einem Dreschkorb, einem in das Dreschwerkgehäuse mündenden Schrägförderer und einer in der frontseitigen Wandung des Dreschwerkgehäuses oberhalb des Schrägförderers angeordneten Revisionsklappe, wobei der die Trommel auf einem Teilbogen umfangende Dreschkorb einen Siebbelag und einen diesen tragenden Rahmen aus zwei Längsleisten und zwei bogenförmigen Stirnleisten aufweist. Die Anordnung des Dreschwerks bei einem Mähdrescher dieser Art ist aus der deutschen Patentschrift 12 87 843 bekannt.

Bei diesem und den heutigen Mähdreschern mit entsprechend eingebautem Tangentialfluß-Dreschwerk kann der Dreschkorb nur ausgewechselt oder gewartet werden, wenn das Schneidwerk einschließlich des Schrägförderers von dem Dreschwerkgehäuse gelöst wird, so daß der Zugang zum Dreschkorb durch die Einlauföffnung für das Dreschgut frei wird. Der Montageaufwand ist also erheblich.

Der Erfindung liegt die Aufgabe zugrunde, eine demgegenüber einfachere Möglichkeit zum Ausbau des Dreschkorbes bei solchen Maschinen zu finden.

Diese Aufgabe wird ausgehend von einem Mähdrescher der einleitend bezeichneten Art erfindungsgemäß dadurch gelöst, daß der Siebbelag in mehrere längs aneinanderstoßende und an den Stoßstellen durch bogenförmige Stege des Rahmens unterstützte Belagabschnitte geteilt ist, die in Umfangsrichtung aus dem Rahmen entnehmbar gestaltet und durch die geöffnete Revisionsklappe hindurch zugänglich und ausbaubar sind. Damit entfällt das Abnehmen des Schneidwerks und des Schrägförderers. Zur Durchführung der erforderlichen Arbeiten bzw. zum Auswechseln des gesamten Siebbelags braucht vielmehr nur die Revisionsklappe geöffnet bzw. abgenommen zu werden, was eine erhebliche Zeiteinsparung zur Folge hat.

Aus der deutschen Auslegeschrift 20 45 070 ist es zwar bei einem Mähdrescher mit im Längsfluß arbeitender Dreschvorrichtung schon bekannt, den dort als Bodensieb bezeichneten Siebbelag aus mehreren getrennten, unabhängig zu handhabenden Teilabschnitten auszubilden, die durch eine seitlich an der Maschine angebrachte Öffnung eingeführt, eingehängt und in Trommelachsrichtung verschoben werden können. Dort werden jedoch die einzelnen Teilabschnitte von unten her an den Dreschkorbrahmen angesetzt und hochgeklappt. Die Teilabschnitte sind daher im Bereich ihrer Stoßränder von unten nicht unterstützt. Bei quer eingebauten Dreschvorrichtungen der eingangs bezeichneten Art ist das Ansetzen und Auswechseln auch eines geteilten Siebbelags von unten nicht möglich. Außerdem wird die fehlende Unterstützung der Belagabschnitte an den zusammenstoßenden Stirnrändern als Nachteil empfunden.

Von der Revisionsklappe aus gesehen liegt bei einem gattungsgemäßen Mähdrescher der Dreschkorb quasi an der gegenüberliegenden Seite der Trommel. Der Abstand zwischen der Trommel und dem Schrägförderer bzw. der Frontwand des Dreschwerkgehäuses ist klein. Deshalb ist es von besonderer Bedeutung, nach Absenken des Dreschkorbes in seine unterste Stellung die Belagabschnitte in Umfangsrichtung aus dem Rahmen entnehmbar zu machen, so daß sie um die Trommel herum angehoben und durch den Zwischenraum zwischen Trommel und Schrägförderer nach oben gebracht und durch die Revisionsklappe entnommen werden können.

Ein weiteres Handicap besteht darin, daß auch bei einem geteilten Siebbelag die seitlich außen liegenden Belagabschnitte nicht einfach in dieser Weise herausgehoben werden können, weil die Vorderteile der Seitenwände des Schrägförderers in den genannten Zwischenraum hineinragen. Es wird daher vorgeschlagen, daß wenigstens drei Belagabschnitte vorgesehen sind, von denen nach Entnahme des mittleren Belagabschnitts die übrigen in Richtung der Längsleisten in die Mittelstellung verschiebbar sind und von hier aus dann herausgenommen werden können.

Für die konstruktive Gestaltung des Dreschkorbes bzw. die feste aber leicht lösbare Halterung der Belagabschnitte im Rahmen wird einmal vorgeschlagen, daß die in Fahrtrichtung hintere Längsleiste des Rahmens eine in Umfangsrichtung weisende und die hinteren Ränder der Belagabschnitte übergreifende Abkantung aufweist. Dies ermöglicht es, die Belagabschnitte tangential aus der durch die Abkantung gebildeten Tasche der hinteren Längsleiste herauszuziehen. Andererseits wird als besonders zweckmäßige Ausführung vorgeschlagen, daß die Belagabschnitte mit ihren vorderen Rändern auf der vorderen Längsleiste des Rahmens nach oben abhebbar aufliegen und mit einer radialen Abkantung diese Längsleiste nach vorn übergreifen. Somit werden die Beläge beim Entnehmen nicht etwa genau ihrer Wölbungsebene folgend herausgedreht, sondern sie können vorne gleichzeitig angehoben und damit leicht in den erwähnten Zwischenraum zwischen der Trommel und dem Schrägförderer hineingeführt werden.

Die Befestigung der Belagabschnitte erfolgt dadurch, daß die vorderen radialen Abkantungen mittels einer Klemmleiste oder dgl. an die Vorderfläche der vorderen Längsleiste des Rahmens angedrückt werden, wobei abstehende Randpartien der Abkantungen sich mit der Klemmleiste verhaken. Die so mit Hilfe einiger Schrauben bewirkte Verklemmung drückt die Belagabschnitte einerseits nach hinten, so daß die hinteren Ränder in den Taschen der hinteren Längsleiste des Rahmens gehalten werden, und zieht die vorderen Ränder nach unten, so daß sich die Beläge nicht vom Rahmen abheben können.

Die einzelnen Belagabschnitte haben an jeder Seite eine nach unten weisende Abkantung oder gebogene Stirnleiste, die an der Stirnleiste eines benachbarten Belagabschnitts oder an einer Stirnleiste des Rahmens anliegt. Damit wird, wenn alle Belagabschnitte eingelegt sind, deren Bewegung in Trommelachsrichtung verhindert. Wichtig ist ferner die sorgfältige Abstützung und Führung von unten. Dazu sind an der Innenseite der Stirnleisten des Rahmens Tragstreifen angebracht, deren Tragflächen zusammen mit den Tragflächen der Stege in einer gemeinsamen gewölbten, zur Siebfläche parallelen Fläche liegen und die Belagabschnitte an ihren stirnseitigen Abkantungen unterstützen. Die Stege, die sich von einer Längsleiste des Rahmen in Querrichtung bogenförmig zur anderen Längsleiste erstrecken, sollten eine ausreichend breite Tragfläche haben, da beim Herausziehen des jeweils in der Mitte liegenden Belagabschnitts dieser mit den hinteren Ecken seiner Stirnleisten auf den Tragflächen der Stege gleitet und geführt wird.

Alles was vorstehend im Zusammenhang mit dem Herausnehmen der Belagabschnitte an Vorteilen und Erläuterungen angegeben worden ist, gilt selbstverständlich auch für das Einführen bzw. Einlegen der Belagabschnitte. Gerade hierbei ist die Wirkung der Stege als Gleitbahnen für den in Umfangrichtung einzuführenden Belagabschnitt von besonderer Bedeutung. Von der mittleren Stellung im Rahmen werden die Belagabschnitte dann in ihre seitlichen Stellungen verschoben und zuletzt der fehlende Mittelabschnitt eingesetzt.

Ein Ausführungsbeispiel der Erfindung wird nachfolgend anhand der Zeichnung erläutert. Im einzelnen zeigt

Fig. 1 einen Vertikalschnitt des Dreschwerks und des oberen Endabschnitts des Schrägförderers eines Mähdreschers in Betriebsstellung,

Fig. 2 die Anordnung wie Fig. 1, jedoch mit abgesenktem Dreschkorbrahmen und verschiedenen Zwischenstellungen eines Belagabschnitts,

Fig. 3 eine räumliche Darstellung des Dreschkorbes mit gelöster Verklemmung,

Fig. 4 eine räumliche Darstellung eines einzelnen Belagabschnitts,

Fig. 5 eine verkürzte Draufsicht des Rahmens des Dreschkorbes nach Fig. 3,

Fig. 6 einen Querschnitt VI-VI des Rahmens nach Fig. 5 zur Darstellung einer Stirnleiste,

Fig. 7 einen Querschnitt VII-VII des Rahmens zur Darstellung eines Steges,

Fig. 8 einen Längsschnitt VIII-VIII des Rahmens und der in Fig. 5 nicht gezeigten Belagabschnitte und

Fig. 9 eine schematische Draufsicht der Anordnung nach Fig. 1 ohne die Dreschtrommel.

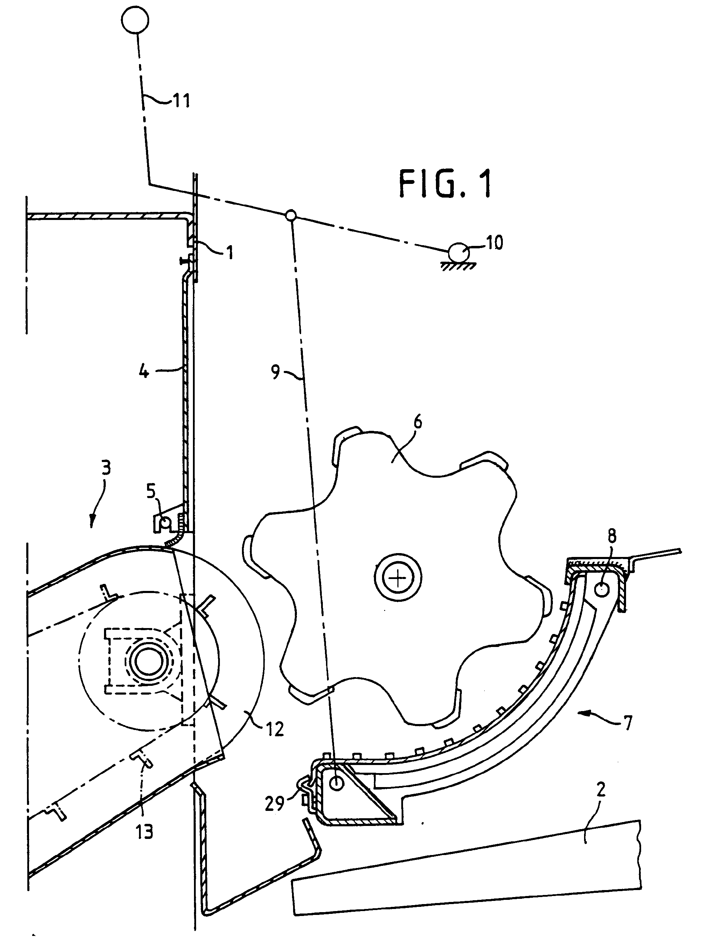

Fig. 1 zeigt bei einem Mähdrescher die Frontwand 1 des Dreschwerkgehäuses, einen Teil der Reinigungsvorrichtung 2, den durch die Frontwand einmündenden Schrägförderer 3 und eine über diesem angeordnete Revisionsklappe 4. Letztere ist unten in zwei seitliche Stehzapfen 5 eingehängt und mittels eines Dichtstreifens gegenüber der Deckwand des Schrägförderers 3 abgedichtet. Im Dreschwerkgehäuse befindet sich die Dreschtrommel 6, deren Achse quer zur Fahrtrichtung verläuft. Etwa über den unteren rechten Quadranten des Trommelumfangs erstreckt sich ein gewölbter Dreschkorb 7, der um in seinem hinteren Randbereich angeordnete, zur Trommelachse parallele Zapfen 8 schwenkbar gelagert ist und mittels zweier in seinem vorderen Bereich angreifender, schematisch dargestellter Lenkerstäbe 9 auf und ab geschwenkt werden kann. Die Lenkerstäbe 9 sind an einem bei 10 gelagerten Betätigungshebel 11 angelenkt.

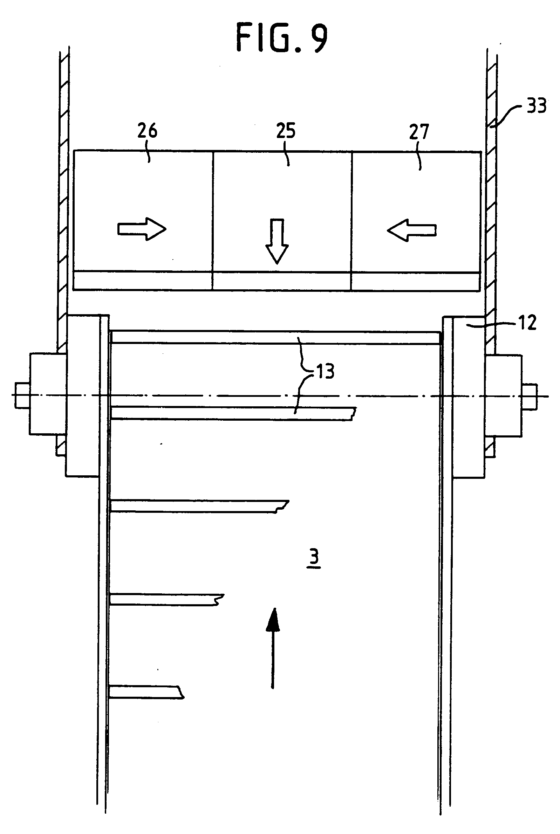

Der Schrägförderer 3 erstreckt sich, wie aus Fig. 9 hervorgeht, nicht über die gesamte Breite des Dreschwerkgehäuses, dessen Seitenwände mit 33 bezeichnet sind. Die vorderen seitlichen Partien 12 des Schrägförderers 3, die auch die Lager für die Umlenkung der kettengeführten Förderstäbe 13 umfassen, ragen vielmehr in das Dreschwerkgehäuse hinein. Aus diesem Grunde steht nur ein Mittelabschnitt der gesamten Dreschwerkbreite für die Entnahme des Korbbelages zur Verfügung.

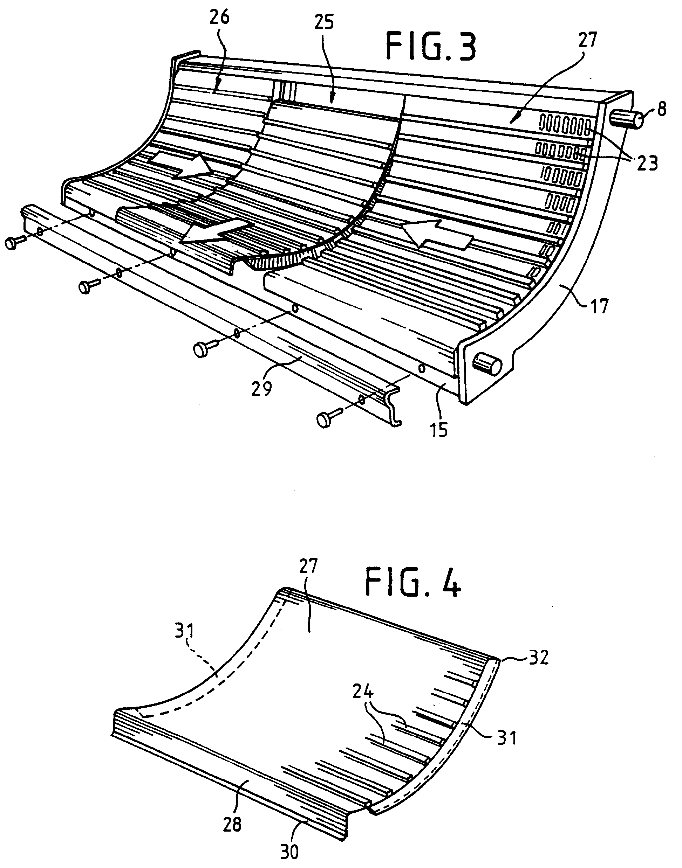

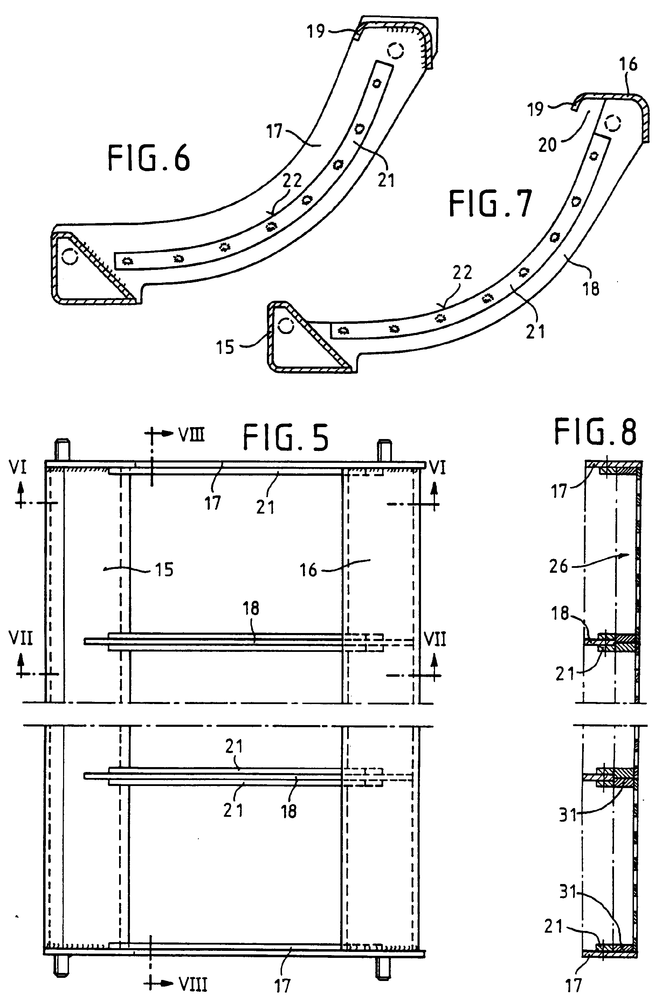

Der Dreschkorb 7 wird nachfolgend anhand der Figuren 3 bis 8 im einzelnen beschrieben. Sein Rahmen (Fig. 5) besteht aus einer vorderen Längsleiste 15, einer hinteren Längsleiste 16, zwei Stirnleisten 17 und zwei zwischen diesen angeordneten, ebenfalls die Längsleisten miteinander quer verbindenden Stegen 18. Die vordere Längsleiste 15 hat einen etwa dreieckigen, frontseitig etwa vertikal und nach hinten schräg abfallenden Hohlquerschnitt, wobei die obere Kante als Tragfläche abgestumpft ist. Die hintere Längsleiste 16 hat einen Winkelquerschnitt, wobei der obere horizontale Schenkel nach vorn ragt und an seinem Rand nach unten etwa tangential zur Bogenfläche bzw. zur Trommel abgekantet ist. Diese Abkantung 19 bildet eine Tasche 20 zur Aufnahme der noch zu beschreibenden Belagabschnitte. Die bogenförmigen Stirnleisten 17, die mit den Längsleisten verschweißt sind, haben an ihren Innenseiten angepunktete schmälere bogenförmige Tragleisten 21. Diese Tragleisten 21 erscheinen auch zu je beiden Seiten der schmäleren Stege 18. Damit ergeben sich an den Stirnleisten 17 Tragschultern, wobei deren Tragflächen 22 (Fig. 6) mit der verbreiterten gemeinsamen Tragfläche 22 der Stege (Fig. 7) in einer gemeinsamen gewölbten Ebene liegen. Außen an den Stirnleisten sind die Lagerzapfen 8 und zwei weitere Zapfen angesetzt, an denen die Lenkerstäbe 9 angreifen.

Der Siebbelag ist wie üblich mit Sieböffnungen 23 und Längsstäben 24 versehen und in drei einzelne Belagabschnitte 25 bis 27 geteilt, die auch unterschiedliche Längen haben können. Insbesondere aus den Figuren 1 (Querschnitt) und 4 ergibt sich die Form eines Belagabschnitts, z. B. 27. Die eigentliche Siebfläche ist gewölbt und am hinteren und vorderen Rand nach unten abgekantet. Samt der hinteren kürzeren Abkantung fügt sich der Belagabschnitt in die Tasche 20 der hinteren Längsleiste 16. Die etwas breitere vordere Abkantung 28 übergreift die vordere Längsleiste des Rahmens und ist mittels einer an deren Frontfläche angeschraubten Klemmleiste 29 lösbar befestigt. Der äußerste Randstreifen 30 der Abkantung 28 ist noch einmal leicht gekantet, um sich mit der Klemmleiste 29 zu verhaken und das Abheben des Belagabschnitts nach oben zu vermeiden. An den Stirnrändern der Belagabschnitte sind bogenförmige Stirnleisten 31 angesetzt, welche auf den erwähnten Tragflächen 22 der Tragstreifen 21 bzw. der Stege 18 aufliegen. Insbesondere können die hinteren Ecken 32 der Stirnleisten beim Ein- und Ausbau auf den Tragflächen 22 gleiten.

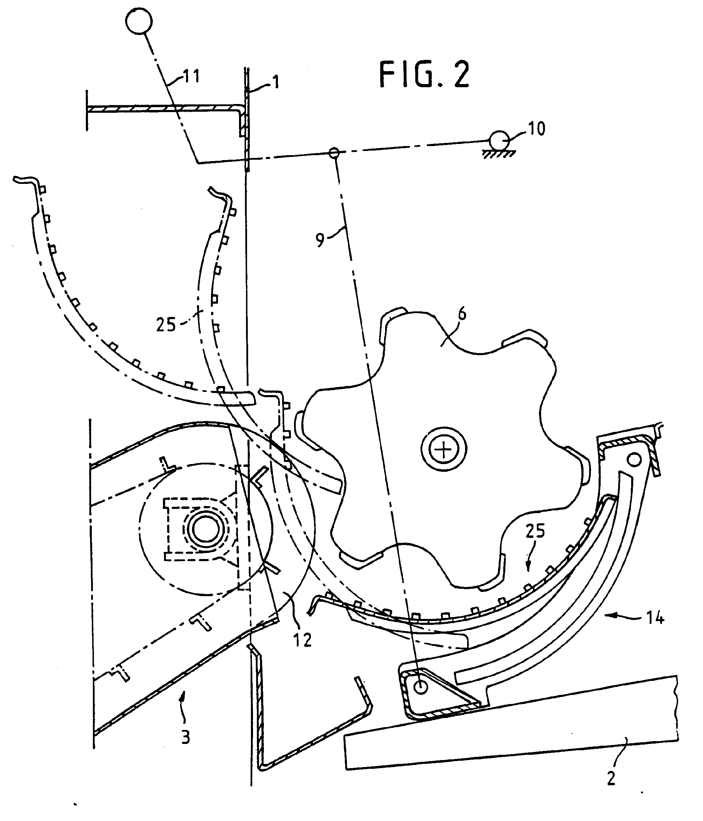

Zum Ausbau der Belagabschnitte 25 bis 27 wird zunächst die Revisionsklappe 4 abgenommen und die Klemmleiste 29 gelöst. Ferner muß der Dreschkorb mittels des Betätigungshebels 11 in seine unterste Stellung geschwenkt werden, wie Fig. 2 zeigt. Jetzt hebt man, wie in Fig. 3 angedeutet, den mittleren Belagabschnitt 25 vorne an, zieht ihn um die Trommel 6 herum und nimmt ihn durch die Revisionsöffnung heraus, wie es mit mehreren strichpunktiert dargestellten Zwischenstadien in Fig. 2 gezeigt ist. Die seitlichen Belagabschnitte 26 und 27 können wegen der vorstehenden Partien 12 des Schrägförderers nicht unmittelbar herausgenommen werden. Deshalb werden sie nacheinander, wie in Fig. 3 durch Pfeile angedeutet, auf dem Rahmen 14 zur Mitte verschoben und dann wie der Belag 25 herausgenommen. Das Einsetzen erfolgt in umgekehrter Reihenfolge, wobei die Belagabschnitte problemlos und schnell in ihre richtige Betriebsstellung verbracht und sicher befestigt werden können.

| | |
|---|---|
| 1 | Frontwand |
| 2 | Reinigungsvorrichtung |
| 3 | Schrägförderer |
| 4 | Revisionsklappe |
| 5 | Stehzapfen |
| 6 | Trommel |
| 7 | Dreschkorb |
| 8 | Zapfen |
| 9 | Lenkerstab |
| 10 | Lager |
| 11 | Betätigungshebel |
| 12 | vorstehende Partie |
| 13 | Förderstäbe |
| 14 | Rahmen |
| 15 | vordere Längsleiste |
| 16 | hintere Längsleiste |
| 17 | Stirnleiste |
| 18 | Steg |
| 19 | Abkantung |
| 20 | Tasche |
| 21 | Tragstreifen |
| 22 | Tragfläche |
| 23 | Sieböffnung |
| 24 | Längsstab |
| 25 | Belagabschnitt |
| 26 | Belagabschnitt |
| 27 | Belagabschnitt |
| 28 | Abkantung |
| 29 | Klemmleiste |
| 30 | Randstreifen |
| 31 | Stirnleiste |
| 32 | Ecke |
| 33 | Seitenwand |

## Patentansprüche

1. Mähdrescher mit einem Dreschwerkgehäuse, einem quer zur Fahrtrichtung eingebauten Tangentialfluß-Dreschwerk, bestehend aus einer Trommel (6) und einem Dreschkorb (7), einem in das Dreschwerkgehäuse mündenden Schrägförderer (3) und einer in der frontseitigen Wandung des Dreschwerkgehäuses oberhalb des Schrägförderers (3) angeordneten Revisionsklappe (4), wobei der die Trommel (6) auf einem Teilbogen umfangende Dreschkorb (7) einen Siebbelag (25, 26, 27) und einen diesen tragenden Rahmen (14) aus zwei Längsleisten und zwei bogenförmigen Stirnleisten aufweist, dadurch gekennzeichnet, daß der Siebbelag in mehrere längs aneinanderstossende und an den Stoßstellen durch bogenförmige Stege (18) des Rahmens (14) unterstützte Belagabschnitte (25, 26, 27) geteilt ist, die in Umfangsrichtung aus dem Rahmen (14) entnehmbar gestaltet und durch die geöffnete Revisionsklappe (4) hindurch zugänglich und ausbaubar sind.

2. Mähdrescher nach Anspruch 1, dadurch gekennzeichnet, daß wenigstens drei Belagabschnitte vorgesehen sind, von denen nach Entnahme des mittleren Belagabschnitts (25) die übrigen (26, 27) in Richtung der Längsleisten (15, 16) in die Mittelstellung verschiebbar sind.

3. Mähdrescher nach Anspruch 1, dadurch gekennzeichnet, daß die in Fahrtrichtung hintere Längsleiste (16) des Rahmens eine in Umfangsrichtung weisende und die hinteren Ränder der Belagabschnitte (25, 26, 27) übergreifende Abkantung (19) aufweist.

4. Mähdrescher nach Anspruch 3, dadurch gekennzeichnet, daß die Belagabschnitte (25, 26, 27) mit ihren vorderen Rändern auf der vorderen Längsleiste (15) des Rahmens nach oben abhebbar aufliegen und mit einer radialen Abkantung (28) diese Längsleiste nach vorn übergreifen.

5. Mähdrescher nach Anspruch 4, dadurch gekennzeichnet, daß die radialen Abkantungen (28) mittels einer Klemmleiste (29) oder dgl. an die Vorderfläche der vorderen Längsleisten (15) angedrückt werden, wobei abstehende Randpartien (30) der Abkantungen (28) sich mit den Klemmleisten (29) verhaken.

6. Mähdrescher nach Anspruch 1, dadurch gekennzeichnet, daß der einzelne Belagabschnitt an jeder Seite eine nach unten weisende Abkantung oder bogenförmige Stirnleiste (31) aufweist, die an der Stirnleiste eines benachbarten Belagabschnitts oder an einer Stirnleiste (17) des Rahmens anliegt.

7. Mähdrescher nach Anspruch 1, dadurch gekennzeichnet, daß an der Innenseite der Stirnleisten (17) des Rahmens Tragstreifen (21) angebracht sind, deren Tragflächen (22) zusammen mit den Tragflächen (22) der Stege (18) in einer gemeinsamen gewölbten, zur Siebfläche parallelen Fläche liegen und die Belagabschnitte an ihren Stirnleisten (31) unterstützen.

## Claims

1. A combine harvester with a thresher housing, a tangential flow thresher mechanism incorporated transversely to the direction of travel and consisting of a drum (6) and a thresher basket (7), an inclined conveyor (3) discharging into the thresher housing and, disposed in the front wall of the thresher housing and above the inclined conveyor (31) an inspection flap (4), the thresher basket (7) engaging around part of the arc of the drum (6) having a sieve lining (25, 26, 27) and, supporting this, a frame (14) consisting of two longitudinal bars and two arcuate end bars, characterised in that the sieve lining is divided into a plurality of longitudinally abutting lining portions (25, 26, 27) supported at the junction points by arcuate webs (18) of the frame (14) and which are constructed so that they can be withdrawn from the frame (14) in a peripheral direction, being accessible and capable of being dismantled through the opened inspection flap (4).

2. A combine harvester according to Claim 1, characterised in that at least three lining portions are provided of which, after removal of the middle lining portion (25), the others (26, 27) are capable of being displaced in the direction of the longitudinal bars (15, 16) and into the midway position.

3. A combine harvester according to Claim 1, characterised in that the in the direction of travel rear longitudinal bar (16) of the frame has pointing in the peripheral direction and engaging over the rear edges of the lining portions (25, 26, 27), an angled over edge portion (19).

4. A combine harvester according to Claim 3, characterised in that the lining portions (25, 26, 27) have their front edges supported on the front longitudibal bar (15) of the frame in such a way that they can be raised upwardly, having a radial angled-over edge (28) adapted to engage forwardly over this longitudinal bar.

5. A combine harvester according to Claim 4, characterised in that the radial analed-over edges (28) are pressed by a clamping bar (29) or the like against the front surface of the front longitudinal bars (15), projecting marginal portions (30) of the angled-over edges (28) becoming engaged with the clamping bars (29).

6. A combine harvester according to claim 1, characterised in that the individual lining portion has on each side a downwardly directed angled-over edge or arcuate end bar (31) which bears on the end bar of an adjacent lining portion or on an end bar (17) of the frame.

7. A combine harvester according to claim 1, characterised in that on the inside face of the end bars (17) of the frame there are bearer strips (21) of which the bearing surfaces (22) together with the bearing surfaces (22) of the webs (18), bear on a common arcuate surface parallel with the sieve surface and support the end bars (31) of the lining portions.

## Revendications

1. Moissonneuse-batteuse, comportant un carter de batteur, un batteur à flux tangentiel monté transversalement à la direction de marche, constitué d'un tambour (6) et d'un panier de battage (7), d'un transporteur incliné (3) débouchant dans le carter du batteur et d'une trappe de contrôle (4) agencée dans la paroi frontale du carter du batteur au-dessus du transporteur incliné (3), le panier de battage (7), entourant partiellement le tambour (6) en formant une courbe, présentant un revêtement de tanisage (25,26,27) et un châssis (14) portant celui-ci, constitué de deux barres longitudinales et de deux barres frontales cintrées, caractérisée en ce que le revêtement de tanisage est subdivisé en plusieurs tronçons de revêtement (25,26,27) aboutés l'un à l'autre longitudinalement et supportés au niveau des points d'aboutement par des traverses cintrées (18) du châssis (14), tronçons qui sont conformés pour pouvoir être retirés du châssis (14) en direction périphérique et sont accessibles et démontables par la trappe de contrôle (4) ouverte.

2. Moissonneuse-batteuse selon la revendication 1, caractérisée en qu'au moins trois tronçons de revêtement sont prévus, desquels, après retrait du tronçon médian (25), les tronçons restants (26,27) sont déplaçables parallèlement aux barres longitudinales (15,16) en position centrale.

3. Moissonneuse-batteuse selon la revendication 1, caractérisée en ce que la barre longitudinale (16), arrière dans le sens de la marche, du châssis présente un repli (19) orienté en direction périphérique et recouvrant les bords arrière des tronçons de revêtement (25,26,27).

4. Moissonneuse-batteuse selon la revendication 3, caractérisée en ce que les bords avant des tronçons de revêtement (25,26,27) reposent sur la barre longitudinale avant (15) du châssis en pouvant être soulevés vers le haut, et recouvrent vers l'avant cette barre longitudinale par un repli radial (28).

5. Moissonneuse-batteuse selon la revendication 4, caractérisée en ce que les replis radiaux (28) sont pressés contre la surface avant des barres longitudinales avant (15) au moyen d'une barre de serrage (29) ou analogue, des parties marginales en saillie (30) des replis (28) se coinçant avec la barre de serrage (29).

6. Moissonneuse-batteuse selon la revendication 1, caractérisée en ce que chaque tronçon individuel de revêtement présente, de chaque côté, un repli orienté vers le bas ou une barre frontale cintrée (31), qui est adjacent à la barre frontale d'un tronçon de revêtement voisin ou à une barre frontale (17) du châssis.

7. Moissonneuse-batteuse selon la revendication 1, caractérisée en ce que, sur la face interne des barres frontales (17) du châssis, sont prévues des bandes de support (21), dont les surfaces de support (22) avec les surfaces de support (22) des traverses (18) se trouvent sur une surface commune cintrée, parallèle à la surface de tanisage, et supportent les tronçons de revêtement sur leurs barres frontales (31).

# FIG. 1

EP 0 396 968 B1

# FIG. 2

8

# FIG.3

# FIG. 4

FIG.6

FIG.7

FIG.5

FIG.8

# FIG. 9